(19) Europäisches Patentamt / European Patent Office / Office européen des brevets

(11) **EP 4 503 205 A1**

(12) **EUROPEAN PATENT APPLICATION**

(43) Date of publication:
**05.02.2025 Bulletin 2025/06**

(21) Application number: **24192623.7**

(22) Date of filing: **02.08.2024**

(51) International Patent Classification (IPC):
**H01M 4/66** (2006.01)  **H01M 10/052** (2010.01)
**C22C 21/00** (2006.01)

(52) Cooperative Patent Classification (CPC):
**H01M 4/661; C22C 21/00; H01M 4/662;
H01M 10/052**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.08.2023 KR 20230101764**

(71) Applicant: **Samsung SDI Co., Ltd.
Yongin-si, Gyeonggi-do 17084 (KR)**

(72) Inventors:
• **Song, Suho
17084 Yongin-si, Gyeonggi-do (KR)**
• **Seino, Hiroshi
17084 Yongin-si, Gyeonggi-do (KR)**

(74) Representative: **Gulde & Partner
Patent- und Rechtsanwaltskanzlei mbB
Berliner Freiheit 2
10785 Berlin (DE)**

(54) **ALUMINUM SUBSTRATE FOR RECHARGEABLE LITHIUM BATTERIES, ELECTRODES, AND RECHARGEABLE LITHIUM BATTERIES**

(57) Provided are an aluminum substrate for a rechargeable lithium battery current collector, an electrode (10, 20) and a rechargeable lithium battery (100) including the same, the aluminum substrate having a micro-strain of about 0.04% to about 0.11% according to Lab source Powder XRD, or a texture fraction of a (220)-plane diffraction line of about 60% to about 85% according to Lab source Powder XRD.

FIG. 2

EP 4 503 205 A1

**Description**

**BACKGROUND**

**1. Field**

Embodiments of the present disclosure provide aluminum substrates for rechargeable lithium batteries, electrodes including the same, and rechargeable lithium batteries.

**2. Description of the Related Art**

A portable information device such as a cell phone, a laptop, smart phone, and/or the like and/or an electric vehicle has used a rechargeable lithium battery having high energy density and easy portability as a driving power source. Recently, research has been actively conducted to use a rechargeable lithium battery having high energy density as a driving power source and/or power storage power source for hybrid and/or electric vehicles.

In order for electrons to be transferred evenly from a positive electrode of rechargeable lithium battery, a positive electrode current collector is utilized. Aluminum substrates are widely used as positive electrode current collectors. It is beneficial for these positive electrode current collectors to have high electrochemical stability and electrical conductivity and not be expensive to be commercially available.

**SUMMARY**

An aluminum substrate having excellent physical properties and suitable for use as a positive electrode current collector for rechargeable lithium batteries is provided.

In some embodiments of a first aspect, an aluminum substrate for a rechargeable lithium battery current collector having a microstrain of about 0.04% to about 0.11% according to Lab source Powder XRD (X-ray diffraction analysis) is provided.

In some embodiments, a thickness of the aluminum substrate may be less than or equal to about 20 $\mu$m.

In some embodiments, a thickness of the aluminum substrate may be about 9 $\mu$m to about 15 $\mu$m.

In some embodiments, a tensile strength of the aluminum substrate may be about 80 N/mm$^2$ to about 320 N/mm$^2$.

In some embodiments, an X-ray density according to Lab source Powder XRD may be about 2.69 g/cm$^3$ to about 2.71 g/cm$^3$.

In some embodiments of the first aspect, an aluminum substrate for a rechargeable lithium battery current collector having a texture fraction of a (220)-plane diffraction line of about 60% to about 85% according to Lab source Powder XRD is provided.

In some embodiments, a thickness of the aluminum substrate may be less than or equal to about 20 $\mu$m.

In some embodiments, a thickness of the aluminum substrate may be about 9 $\mu$m to about 15 $\mu$m.

In some embodiments, a tensile strength of the aluminum substrate may be about 80 N/mm$^2$ to about 320 N/mm$^2$.

In some embodiments, an X-ray density according to Lab source Powder XRD may be about 2.69 g/cm$^3$ to about 2.71 g/cm$^3$.

In another aspect, an electrode for a rechargeable lithium battery including the aluminum substrate and an electrode active material layer on the aluminum substrate is provided.

In yet another aspect, a rechargeable lithium battery including a positive electrode including the aluminum substrate and a positive electrode active material layer on the aluminum substrate; a negative electrode; and an electrolyte is provided.

In some embodiments, an aluminum substrate having suitable or optimal physical properties for use as a positive current collector of a rechargeable lithium battery is provided.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

**BRIEF DESCRIPTION OF THE DRAWINGS**

The accompanying drawings, together with the specification, illustrate embodiments of the subject matter of the present disclosure, and, together with the description, serve to explain principles of embodiments of the subject matter of the present disclosure.

FIG. 1 is a perspective view schematically showing a rechargeable lithium battery according to some embodiments.

FIG. 2 is a cross-sectional view schematically showing a rechargeable lithium battery according to some embodiments.

FIGS. 3-4 are perspective views schematically showing rechargeable lithium batteries according to some embodiments.

## DETAILED DESCRIPTION

Hereinafter, embodiments of the present disclosure will be described in more detail so that those of ordinary skill in the art can easily implement them. However, the subject matter of this disclosure may be embodied in many different forms and should not be construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the described constituents.

Herein, it should be understood that terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that if an element such as a layer, film, region, or substrate is referred to as being "on" another element, it can be directly on the other element or intervening elements may also be present. In contrast, if an element is referred to as being "directly on" another element, there are no intervening elements present.

In addition, the term "layer" as used herein includes not only a shape formed on the whole surface if viewed in a plan view, but also a shape formed on a partial surface (e.g., a portion of a surface).

In addition, the average particle diameter may be measured by any suitable method generally used in the art, for example, the average particle diameter may be measured by a particle size analyzer, and/or may be measured by a transmission electron microscopic image and/or a scanning electron microscopic image. In some embodiments, it is possible to obtain an average particle diameter value by measuring using a dynamic light scattering method, performing data analysis, counting the number of particles for each particle size range, and calculating from this. Unless otherwise defined, the average particle diameter may mean the diameter ($D_{50}$) of particles having a cumulative volume of 50 volume% in the particle size distribution. As used herein, if a definition is not otherwise provided, the average particle diameter means a diameter ($D_{50}$) of particles having a cumulative volume of 50 volume% in the particle size distribution that is obtained by measuring the size (diameter or length of the major axis) of about 20 particles at random in a scanning electron microscope image.

Herein, "or" is not to be construed as an exclusive meaning, for example, "A or B" is construed to include A, B, A+B, and/or the like.

As used herein, the term "metal" is interpreted as a concept including ordinary metals, transition metals and metalloids (semi-metals).

## Aluminum Substrate

The aluminum substrate for a rechargeable lithium battery current collector according to some embodiments satisfies a microstrain of about 0.04% to about 0.11% according to Lab source Powder XRD. Embodiments of this aluminum substrate has excellent physical properties such as tensile strength, elongation, electrochemical safety, and electronic conductivity (e.g., electrical conductivity), so that it may be suitable or optimized for application as a positive current collector for rechargeable lithium batteries.

Physical properties such as the tensile strength of aluminum substrates have relatively high fluctuations in result values depending on a measurement environment, but microstrain has little variation depending on the measurement environment, so that the consistency of the results is high. Additionally, microstrain may be easily measured using a general Lab Source Powder XRD. Lab Source Powder XRD may refer to a powder X-ray diffraction using a laboratory source (eg. Cu-K$\alpha$1 source), and measuring device may be, for example, D8 Advance made by Bruker. The microstrain is found to have a very high positive correlation with tensile strength, and accordingly, it is believed that it can replace tensile strength evaluation. A correlation coefficient between microstrain and tensile strength is confirmed to exceed approximately 90%.

The term microstrain refers to a subtle unevenness and/or distortion within the crystal lattice of a metal. The microstrain may be created if stress is applied to a metal material, such as during cold working. In some embodiments, the microstrain may occur if a solid solution is formed due to heterogeneous elements inside the metal. This microstrain may be calculated using a spreading phenomenon of the XRD diffraction line, and may be calculated using Equation 1 below.

## Equation 1

$$FWHM \times \cos\theta = \varepsilon \times 4\sin\theta$$

In Equation 1, FWHM is a full width at half maximum and $\varepsilon$ is a microstrain value.

For example, the aluminum substrate according to some embodiments may have a face centered cubic (FCC) structure, and thus may be preferentially oriented to the (220)- and (311) planes. An angle of the (220)-plane may be 64° to 66°, and an angle of the (311) plane may be 77° to 79°. The angle in each crystal plane, the Bragg angle corresponding to an origin, and a full width at half maximum on each crystal plane are inserted into in Equation 1 to calculate $\varepsilon$.

The microstrain may be measured, for example, in a Williamson-Hall method (WH method), wherein for further information on the microstrain and its calculation method, refer to "ACTA METALLURGICA, VOL. 1, JAN. 1953. 22-31, G. K. Williamson and W. H. Hall, X-RAY LINE BROADENING FROM FILED ALUMINIUM AND WOLFRAM," or "Ron Jenkins, Robert L. Snyder, Introduction to X-ray Powder Diffractometry, Vol. 138, p. 93, 1996", the contents of which pertaining to microstrain are hereby incorporated by reference.

The microstrain according to some embodiments may be in a range of about 0.04% to about 0.11%, for example, in a preferred range of about 0.05% to about 0.10%, or about 0.06% to about 0.09%.

The aluminum substrate may have the face centered cubic structure, which is Fm-3m which is No. 225 of a space group. The aluminum substrate may be said to have 3 aluminum atoms at 6 face centers (1/2 x 6) and 1 aluminum atom at 8 vertices (1/8 x 8) in a unit crystal lattice (unit cell). The unit crystal lattice has a length (unit cell lattice parameter) of about 4.049 Å.

The aluminum substrate for a rechargeable lithium battery current collector according to some embodiments may have a texture fraction of the (220)-plane diffraction line in a range of about 60% to about 85%, for example, in a preferred range of about 60% to about 75%, or about 70% to about 85%, according to Lab source Powder XRD. Such an aluminum substrate may exhibit suitable or the most optimal properties as a positive electrode current collector for a rechargeable lithium battery.

The texture fraction is obtained by converting a texture coefficient (TC) of each crystal plane to a percentage in the face centered cubic structure of the aluminum and may be expressed as the (220)-plane texture fraction of the aluminum, "Fraction of TC for Fm-3m Al 220," etc. The texture fraction may be referred to as a ND (Normal Direction) texture fraction of the aluminum substrate. The ND is a perpendicular direction to the aluminum substrate surface, and also, perpendicular to a RD (Rolling Direction) and a TD (Transverse Direction). For the texture fraction, refer to International Crystallography Association of Al (PDF 04-0787), "Isao YAGI et. Al., Journal of the Ceramic Society of Japan, 102 3, p. 297 (1994)," or "C. S. Barret and T. B. Massalski, Structure of Metals, Pergamon Press, Oxford, p. 204 (1980)," the contents of which pertaining to the texture fraction are hereby incorporated by reference. For example, TC may be calculated using Equation 2.

## Equation 2

$$TC\left(hkl\right) = \frac{I\left(hkl\right)/\left(I_0 hkl\right)}{(1/n) \cdot \Sigma[I(hkl)/I_0(hkl)]}$$

In Equation 2, I(hkl) and $I_0$(hkl) respectively indicate integrated intensities of (hkl) diffraction of an experimental specimen and a standard powder specimen, n is the total number of diffraction planes, and $\Sigma$ is a sum thereof. TC of the (220)-plane is a value obtained by inputting the (220)-plane into the (hlk) plane in Equation 2.

The aluminum substrate according to some embodiments may have a (220)-plane texture fraction of about 60% to about 85%, for example, about 62% to about 84%.

The aluminum substrate according to some embodiments may have an X-ray density of about 2.69 g/cm³ to about 2.71 g/cm³ according to Lab source Powder XRD. The X-ray density may be obtained by dividing a weight of elements in the unit crystal lattice (unit cell) by a volume of the unit crystal lattice. For the X-ray density and its measuring method, refer to "B. D. Cullity, Addison-Wesley Pub. Co. Inc., 1978, pp.88 to pp.89," the contents of which pertaining to the X-ray density and measurement thereof are hereby incorporated by reference.

For example, the X-ray density may be calculated using Equation 3.

Equation 3

$$\rho = \frac{\sum A}{NV} = \frac{\sum A}{(6.02257 \times 10^{23})(V' \times 10^{-24})} = \frac{1.66042 \sum A}{V'}$$

In Equation 3, $\rho$ indicates X-ray density (gm/cm$^3$), $\sum A$ is a sum of atomic weight of all elements in the unit crystal lattice, N is Avogadro's number, V is a volume of the unit crystal lattice, the unit is cm$^3$, and V' is a volume of the unit crystal lattice, and the unit is Å$^3$.

The aluminum substrate, for example, may have an X-ray density of about 2.699 g/cm$^3$ to about 2.706 g/cm$^3$.

In some embodiments, the aluminum substrate may have a thickness of less than or equal to about 20 $\mu$m, for example, about 9 $\mu$m to about 15 $\mu$m, or about 10 $\mu$m to about 15 $\mu$m, for example about 10 $\mu$m, about 13.5 $\mu$m, about 15 $\mu$m, or the like.

In some embodiments, the aluminum substrate may have UTM (universal testing machine) tensile strength of about 80 N/mm$^2$ to about 320 N/mm$^2$, for example, about 100 N/mm$^2$ to about 320 N/mm$^2$, about 150 N/mm$^2$ to about 320 N/mm$^2$, or about 200 N/mm$^2$ to about 320 N/mm$^2$.

An aluminum substrate satisfying the aforementioned properties may be manufactured by adjusting types (or kinds) of raw metal materials, temperature and/or pressure conditions in a thin-filming process and/or a drying process, presence or absence of a formation process and/or its conditions, presence or absence of an additional press process and/or its method, and/or the like. The properties of the aluminum substrate may be determined by conditions of casting, annealing, and/or roll press processes. The final properties may be different depending on a content of each chemical component comprising an alloy in the casting process and also, adjusted through conditions such as heat treatment temperature, time, etc. in the annealing process. The roll press process may be divided into hot rolling and cold rolling, and properties such as strength and/or the like of the final substrate may vary depending on a thickness and a pressing rate of materials input into each process.

A method of manufacturing the aluminum substrate may include continuous casting, direct casting, and/or the like. The continuous casting may include, for example, dissolving raw materials, casting, annealing, cold rolling, and/or cutting. The direct casting may include, for example, dissolving raw materials, casting, faceting, homogenizing, hot rolling, cold rolling, annealing, and/or cutting.

**Rechargeable Lithium Battery**

In some embodiments, an electrode for a rechargeable lithium battery includes the aluminum substrate and an electrode active material layer on the aluminum substrate.

For example, the electrode may be a positive electrode. Accordingly, some embodiments provide a positive electrode for a rechargeable lithium battery including an aluminum substrate as a current collector, and a positive electrode active material layer on the aluminum substrate.

In some embodiments, a rechargeable lithium battery includes a positive electrode including the aluminum substrate and a positive electrode active material layer on the aluminum substrate; a negative electrode; and an electrolyte. Herein, the electrolyte may be a liquid electrolyte or a solid electrolyte.

For example, in some embodiments, a rechargeable lithium battery may include a positive electrode including the aforementioned aluminum substrate and a positive electrode active material layer, a negative electrode, a separator between the positive electrode and the negative electrode, and an electrolyte solution. As another example, an all-solid-state rechargeable battery may include a positive electrode including the aforementioned aluminum substrate and a positive electrode active material layer, a negative electrode, and a solid electrolyte layer between the positive electrode and the negative electrode.

Hereinafter, a rechargeable lithium battery using an electrolyte solution will be described as an example, but the present disclosure is not limited thereto.

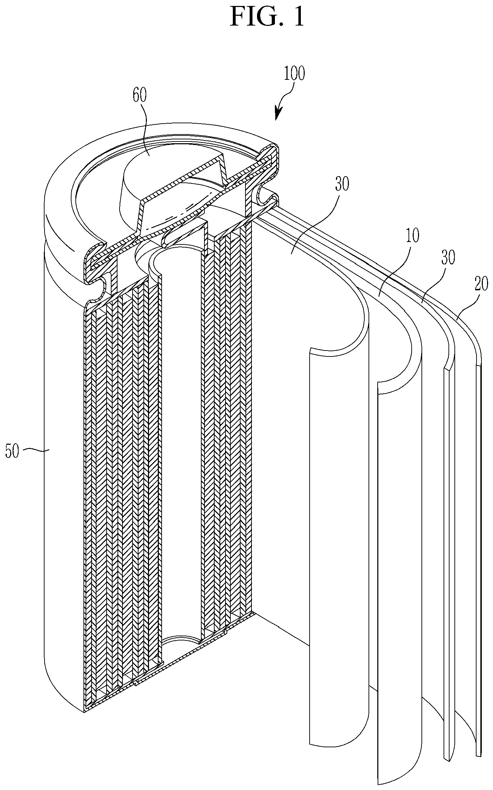

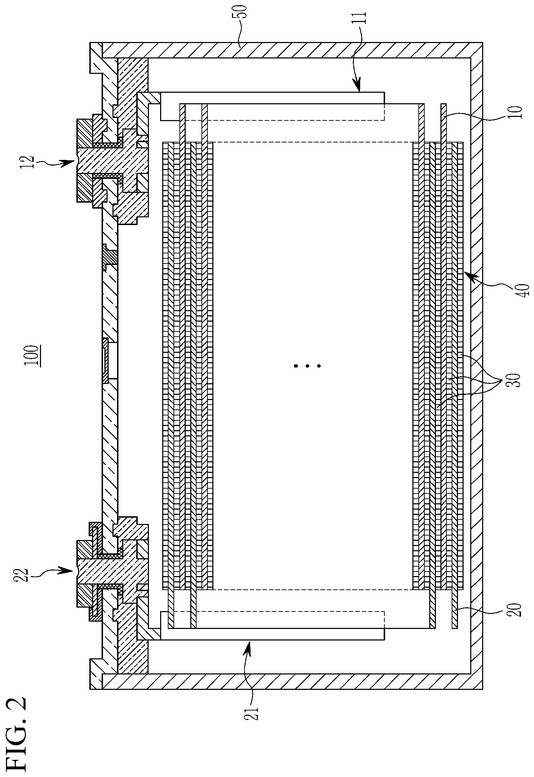

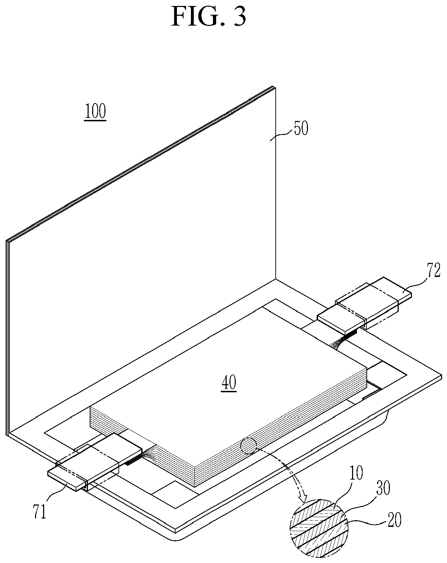

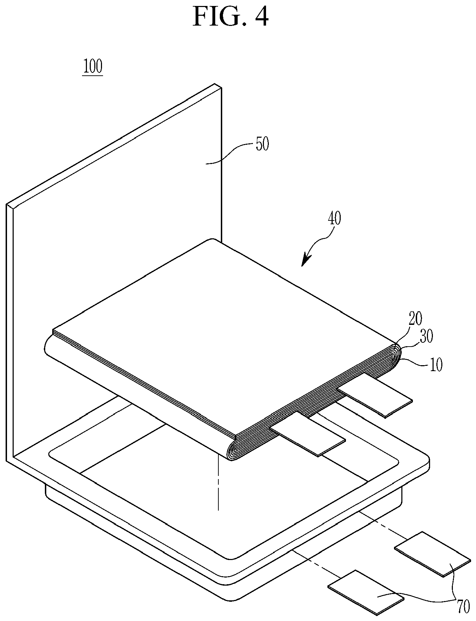

The rechargeable lithium battery may be classified into cylindrical, prismatic, pouch, coin, etc. depending on the shape. FIG. 1 is a perspective view schematically showing a rechargeable lithium battery according to some embodiments. FIG. 2 is a cross-sectional view schematically showing a rechargeable lithium battery according to some embodiments. FIGS. 3-4 are perspective views schematically showing rechargeable lithium batteries according to some embodiments. FIG. 1 shows a cylindrical battery, FIG. 2 shows a prismatic battery, and FIGS. 3 and 4 show pouch-type batteries. Referring to FIGS. 1 to 4, the rechargeable lithium battery 100 includes an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing a case 50 as shown in FIG. 1. In FIG. 2, the rechargeable lithium battery 100 may include a positive (electrode) lead tab 11, a positive terminal 12, a negative (electrode) lead tab 21, and a negative terminal 22. As shown in FIGS. 3-4, the rechargeable lithium battery 100 includes an electrode tab 70 (FIG. 4), for example, a positive electrode tab 71 and a negative electrode tab 72 (FIG. 3) serving as an electrical path for inducing the current formed in the electrode assembly 40 to the outside.

Positive **Electrode**

The positive electrode for a rechargeable lithium battery may include the aforementioned aluminum substrate as a current collector and a positive electrode active material layer on the aluminum substrate. The positive electrode active material layer includes a positive electrode active material and may further include a binder and/or a conductive material (e.g., an electrically conductive material).

The positive electrode active material may include a compound (lithiated intercalation compound) capable of intercalating and deintercalating lithium. For example, at least one of a composite oxide of lithium and a metal selected from cobalt, manganese, nickel, and combinations thereof may be used.

The composite oxide may be a lithium transition metal composite oxide, and examples thereof may include lithium nickel-based oxide, lithium cobalt-based oxide, lithium manganese-based oxide, lithium iron phosphate-based compound, cobalt-free lithium nickel-manganese-based oxide, or a combination thereof.

As an example, the compounds represented by any one of the following chemical formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); $Li_aFePO_4$ ($0.90 \leq a \leq 1.8$).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and $L^1$ is Mn, Al or a combination thereof.

For example, the positive electrode active material may be may be a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material can realize high capacity and can be applied to a high-capacity, high-density rechargeable lithium battery.

An amount of the positive electrode active material may be about 90 wt% to about 99.5 wt% based on 100 wt% of the positive electrode active material layer, and amounts of the binder and the conductive material may be about 0.5 wt% to about 5 wt%, respectively, based on 100 wt% of the positive electrode active material layer.

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminum, silver, and/or the like; a conductive polymer (e.g., an electrically conductive polymer) such as a polyphenylene derivative; and/or a mixture thereof.

Negative Electrode

A negative electrode for a rechargeable lithium battery includes a negative electrode current collector and a negative electrode active material layer on the negative electrode current collector. The negative electrode active material layer may include a negative electrode active material and may further include a binder and/or a conductive material (e.g., an electrically conductive material).

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example crystalline carbon, amorphous carbon, or a combination thereof as a carbon-based negative electrode active material. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, $SiO_x$ ($0 < x < 2$), a Si-Q alloy (wherein Q is selected from an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, $SnO_2$, a Sn-based alloy, or a combination thereof.

The silicon-carbon composite may be a composite of silicon and amorphous carbon. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material and/or Sn-based negative electrode active material may be mixed together with the carbon-based negative electrode active material.

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If an aqueous binder is used as the negative electrode binder, a cellulose-based compound capable of imparting or increasing viscosity may be further included. As the cellulose-based compound, one or more selected from carboxymethyl cellulose, hydroxypropylmethyl cellulose, methyl cellulose, and/or alkali metal salts thereof may be mixed together and used. The alkali metal may be Na, K, and/or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminum silver, and/or the like; a conductive polymer (e.g., an electrically conductive polymer) such as a polyphenylene derivative; and/or a mixture thereof.

The negative electrode current collector may be selected from a copper foil, a nickel foil, a stainless steel foil, a titanium foil, a nickel foam, a copper foam, a polymer substrate coated with a conductive metal (e.g., an electrically conductive material), and a combination thereof.

**Electrolyte Solution**

The electrolyte solution for a rechargeable lithium battery includes a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In some embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group including a double bond, an aromatic ring, or an ether bond, and/or the like); amides such as dimethylformamide; dioxolanes such as 1,3-dioxolane, 1,4-dioxolane, and/or the like; sulfolanes, and/or the like.

The non-aqueous organic solvent may be used alone or in a mixture of two or more types (or kinds).

In some embodiments, if using a carbonate-based solvent, a cyclic carbonate and a chain carbonate may be mixed together and used, and the cyclic carbonate and the chain carbonate may be mixed together in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from $LiPF_6$, $LiBF_4$, $LiSbF_6$, $LiAsF_6$, $LiClO_4$, $LiAlO_2$, $LiAlCl_4$, $LiPO_2F_2$, $LiCl$, $Lil$, $LiN(SO_3C_2F_5)_2$, $Li(FSO_2)_2N$ (lithium bis(fluorosulfonyl)imide; LiFSI), $LiC_4F_9SO_3$, $LiN(C_xF_{2x+1}SO_2)(C_yF_{2y+1}SO_2)$, x and y are integers of 1 to 20, lithium trifluoromethane sulfonate, lithium tetrafluoroethane sulfonate, lithium difluorobis(oxalato)phosphate (LiDFOB), and lithium bis(oxalato) borate (LiBOB).

Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/-polypropylene three-layer separator, and/or the like.

The separator may include a porous substrate and a coating layer including an organic material, an inorganic material, or a combination thereof on one or both surfaces of the porous substrate.

The porous substrate may be a polymer film formed of any one selected from polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based heavy polymer and/or a (meth)acrylic-based polymer.

The inorganic material may include inorganic particles selected from $Al_2O_3$, $SiO_2$, $TiO_2$, $SnO_2$, $CeO_2$, $MgO$, $NiO$, $CaO$, $GaO$, $ZnO$, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed together in one coating layer, or a coating layer including an organic material and a coating layer including an inorganic material may be stacked.

**Examples and Comparative Examples**

Examples and comparative examples of the present disclosure are described below. However, the following examples are only examples of the present disclosure, and the present disclosure is not limited to the following examples.

In Table 1, lab source powder XRD information and UTM tensile strength of the aluminum substrates according to Examples 1 to 9 respectively are shown. In Table 1, A1100 and A8021 represent aluminum varieties. The term 'environment' refers to a drying temperature, IHA of Example 9 means induction heat annealing, which refers to a process of lowering a tensile strength of the Al rolled substrates through self-induced heating. IHA 7.0 kW indicates that the self-induced heating annealing process was performed utilizing an electric power of 7.0 kW. In Examples 6 and 7, VD refers to vacuum-drying, and VD@120 °C indicates that the vacuum-drying was performed at 120 °C. The term 'Formation' in Example 8 means that a formation process was performed.

(Table 1)

|  |  | Thickness (μm) | Environment | Process | Lab Source Powder XRD | | | UTM tensile strength (N/mm²) |
|---|---|---|---|---|---|---|---|---|
|  |  |  |  |  | Microstrain (%) | Fraction of TC (%) | X-ray Density (g/cm³) |  |
| Example 1 | Ultra-high strength (A1100) | 13.5 | 25 °C | - | 0.092 | 82.6 | 2.706 | 306 |
| Example 2 | High strength (A1100) | 13.5 | 25 °C | - | 0.076 | 79.6 | 2.706 | 255 |
| Example 3 | High strength (A1100) | 15.0 | 25 °C | - | 0.081 | 79.8 | 2.703 | 272 |
| Example 4 | High elonga-tion (A8021) | 13.5 | 25 °C | - | 0.066 | 63.7 | 2.705 | 220 |
| Example 5 | Ultra-high strength (A1100) | 15.0 | 25 °C | - | 0.092 | 83.8 | 2.701 | 300 |
| Example 6 | High strength (A1100) | 13.5 | 120 °C | VD@ 120 °C | 0.055 | 62.9 | 2.699 | 225 |
| Example 7 | high strength (A1100) | 135 | 145 °C | VD@ 145 °C | 0.051 | 62.6 | 2.700 | 207 |
| Example 8 | High strength (A1100) | 13.5 | 25 °C | Formation | 0.105 | 72.8 | 2.699 | 320 |
| Example 9 | General strength (A1100) | 10.0 | IHA 7.0 kW | IHA | 0.043 | 70.8 | 2.700 | 91 |

In Table 1, Lab Source Powder XRD was performed by using Powder XRD (D8 Advance) made by Bruker under the following conditions.

- X-ray wavelength: 1.5406 Å (CuKα1)
- Slit condition: Divergence Silt 0.5 °, Scattering Slit 0.5 °, Receiving Slit 0.20 mm
- Scan conditions: Continuous Scan, 35 °≤2θ≤120 °, 0.01 °/step, 2.84 °/min, total measurement time 30 min.
- Sample Stage rotation speed: 10 rpm

Methods of measuring the microstrain, the (220)-plane texture fraction, and the X-ray density was the same as described above.

The UTM tensile strength was measured by using a tensile strength tester of UTM 3342 (universal testing machine) made by Instron.

In the process of manufacturing a positive electrode for a rechargeable lithium battery cell, the positive electrode was roll-pressed to densify a positive electrode active material layer and increase a bonding force between the aluminum substrate of a thin film current collector and the positive electrode active material layer. However, the aluminum substrate of a thin film current collector was damaged due to a high pressure in this roll press process. Accordingly, an aluminum substrate having high microstrain characteristics and high tensile strength is desirable or preferable, but if the microstrain is too high, the aluminum substrate may be curved, thereby deteriorating processability. In order to improve this curve phenomenon, there may be a method of performing the induction heat annealing (IHA) before the roll pressing of the positive electrode to reduce the microstrain and thus increase the processability, but if the microstrain becomes too low, the aluminum substrate may be adhered to IHA zigs or torn apart. Accordingly, it is important to manufacture the aluminum substrate as a thin film having microstrain characteristics in an appropriate or suitable range.

For example, the aluminum substrate of Comparative Example 1, which was heat-treated at 200 °C for 12 hours, exhibited a microstrain of about 0.034% but low tensile strength, which turned out to be inappropriate as a positive electrode current collector. The A3104 aluminum substrate of Comparative Example 2 exhibited a microstrain of about 0.156% and tensile strength of 355 N/mm$^2$, but the curve phenomenon occurred, resultantly deteriorating processibility, which turned out to be inappropriate. The A1100 aluminum substrate of Comparative Example 3, which was heat-treated at 140 °C for 1 hour, exhibited a (220)-plane texture fraction of 59% but low tensile strength, which also turned out to be inappropriate as a positive electrode current collector.

On the contrary, Examples 1 to 9, referring to Table 1, each exhibited a microstrain satisfying a range of 0.04% to 0.11%, a (220)-plane texture fraction of 60% to 85%, and X-ray density satisfying a range of 2.69 g/cm$^3$ to 2.71 g/cm$^3$. The aluminum substrates of the examples had appropriately high tensile strength and thus were not damaged during the positive electrode manufacturing process or the battery manufacturing process and exhibited no curve phenomenon to secure excellent processibility, which turned out to be the most appropriate as a positive electrode current collector for a rechargeable lithium battery.

While the subject matter of this disclosure has been described in connection with what is presently considered to be practical example embodiments, it is to be understood that the present disclosure is not limited to the disclosed embodiments. On the contrary, it is intended to cover various modifications and equivalent arrangements included within the scope of the appended claims, and equivalents thereof.

Description of Symbols

| | | | |
|---|---|---|---|
| 100: | rechargeable lithium battery | 10: | positive electrode |
| 11: | positive (electrode) lead tab | 12: | positive terminal |
| 20: | negative electrode | 21: | negative (electrode) lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. An aluminum substrate for a rechargeable lithium battery current collector having a microstrain of about 0.04% to about 0.11% according to Lab source Powder XRD, or having a texture fraction of a (220)-plane diffraction line of about 60% to about 85% according to Lab source Powder XRD.

2. The aluminum substrate as claimed in claim 1, wherein:
a thickness of the aluminum substrate is less than or equal to about 20 μm.

3. The aluminum substrate as claimed in claim 1, wherein:
a thickness of the aluminum substrate is about 9 μm to about 15 μm.

4. The aluminum substrate as claimed in any one of the preceding claims, wherein:
a tensile strength of the aluminum substrate is about 80 N/mm$^2$ to about 320 N/mm$^2$.

5. The aluminum substrate as claimed in any one of the preceding claims, wherein:
an X-ray density according to Lab source Powder XRD is about 2.69 g/cm$^3$ to about 2.71 g/cm$^3$.

6. An electrode (10, 20) for a rechargeable lithium battery (100), comprising the aluminum substrate as claimed in any one of claims 1 to 5, and an electrode active material layer on the aluminum substrate.

7. A rechargeable lithium battery (100), comprising:

a positive electrode (10) comprising the aluminum substrate as claimed in any one of claims 1 to 5, and an electrode active material layer on the aluminum substrate;
a negative electrode (20); and
an electrolyte.

# FIG. 1

FIG. 2

# FIG. 3

# FIG. 4

Europäisches
Patentamt

European
Patent Office

Office européen
des brevets

# EUROPEAN SEARCH REPORT

**Application Number**

EP 24 19 2623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "International Alloy Designations and Chemical Composition Limits for Wrought Aluminum and Wrought Aluminum Alloys - Teal Sheets", The Aluminum Association, 1 August 2018 (2018-08-01), XP093136641, Retrieved from the Internet: URL:https://www.aluminum.org/sites/default /files/2021-10/Teal%20Sheet.pdf [retrieved on 2024-03-01] * the whole document * | 1-6 | INV. H01M4/66 H01M10/052 C22C21/00 |
| X | SHEPELEVICH V G ET AL: "Texture of rapidly solidified foils of aluminium and its alloys", JOURNAL OF ALLOYS AND COMPOUNDS, ELSEVIER SEQUOIA, LAUSANNE, CH, vol. 403, no. 1-2, 10 November 2005 (2005-11-10), pages 267-269, XP025330356, ISSN: 0925-8388, DOI: 10.1016/J.JALLCOM.2004.07.089 [retrieved on 2005-11-10] * tables 1,2 * | 1-6 | |
| X | ERANG CHO ET AL: "Corrosion/passivation of aluminum current collector in bis(fluorosulfonyl)imide-based ionic liquid for lithium-ion batteries", ELECTROCHEMISTRY COMMUNICATIONS, ELSEVIER AMSTERDAM, NL, vol. 22, 11 May 2012 (2012-05-11), pages 1-3, XP028450215, ISSN: 1388-2481, DOI: 10.1016/J.ELECOM.2012.05.018 [retrieved on 2012-05-18] * 1. Introduction * | 7 | **TECHNICAL FIELDS SEARCHED (IPC)** H01M C22C |

-/--

The present search report has been drawn up for all claims

| Place of search | Date of completion of the search | Examiner |
|---|---|---|
| Munich | 6 December 2024 | González Junquera, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 24 19 2623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAKANISHI SHIGEKI ET AL: "Effect of surface treatment for aluminum foils on discharge properties of lithium-ion battery", TRANSACTIONS OF NONFERROUS METALS SOCIETY OF CHINA, vol. 24, no. 7, 1 July 2014 (2014-07-01), pages 2314-2319, XP055772858, AMSTERDAM, NL ISSN: 1003-6326, DOI: 10.1016/S1003-6326(14)63350-1 * "Introduction" * | 7 | |

TECHNICAL FIELDS
SEARCHED       (IPC)

The present search report has been drawn up for all claims

| Place of search | Date of completion of the search | Examiner |
|---|---|---|
| Munich | 6 December 2024 | González Junquera, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  ............................................................................................
& : member of the same patent family, corresponding
   document

EPO FORM 1503 03.82 (P04C01)

**REFERENCES CITED IN THE DESCRIPTION**

**Non-patent literature cited in the description**

- **G. K. WILLIAMSON** ; **W. H. HALL**. X-RAY LINE BROADENING FROM FILED ALUMINIUM AND WOLFRAM. *ACTA METALLURGICA*, January 1953, vol. 1, 22-31
- **RON JENKINS** ; **ROBERT L. SNYDER**. *Introduction to X-ray Powder Diffractometry*, 1996, vol. 138, 93

- **ISAO YAGI**. *Journal of the Ceramic Society of Japan*, 1994, vol. 102 (3), 297
- **C. S. BARRET** ; **T. B. MASSALSKI**. Structure of Metals. Pergamon Press, 1980, 204